(19) Europäisches Patentamt
European Patent Office
Office européen des brevets

(11) **EP 4 217 790 B1**

(12) **FASCICULE DE BREVET EUROPEEN**

(45) Date de publication et mention de la délivrance du brevet:
**30.10.2024   Bulletin 2024/44**

(21) Numéro de dépôt: **21798071.3**

(22) Date de dépôt: **24.09.2021**

(51) Classification Internationale des Brevets (IPC):
**G02B 27/64** (2006.01)      **G05B 19/00** (2006.01)

(52) Classification Coopérative des Brevets (CPC):
**G02B 27/644**

(86) Numéro de dépôt international:
**PCT/FR2021/051652**

(87) Numéro de publication internationale:
**WO 2022/064157 (31.03.2022 Gazette 2022/13)**

(54) **ASSERVISSEMENT ADAPTATIF D'UN VISEUR OPTRONIQUE**

ADAPTIVE RÜCKKOPPLUNGSSTEUERUNG EINER OPTRONISCHEN SICHT

ADAPTIVE FEEDBACK CONTROL OF AN OPTRONIC SIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.09.2020   FR 2009793**

(43) Date de publication de la demande:
**02.08.2023   Bulletin 2023/31**

(73) Titulaire: **Safran Electronics & Defense**
**75015 Paris (FR)**

(72) Inventeurs:
• **HIRWA, Serge**
**75015 Paris (FR)**
• **QUADRAT, Arnaud**
**75015 Paris (FR)**

(74) Mandataire: **Ernest Gutmann - Yves Plasseraud S.A.S.**
**C/o Plasseraud IP**
**104 Rue de Richelieu**
**CS 92104**
**75080 Paris Cedex 02 (FR)**

(56) Documents cités:
WO-A1-2019/153263     US-A- 5 868 031
US-A1- 2004 173 726     US-A1- 2015 264 262
US-A1- 2017 175 948     US-A1- 2021 041 772

EP 4 217 790 B1

## Description

Domaine technique de l'invention

Le présent document concerne l'asservissement d'un viseur optronique pour engin motorisé tel qu'un aéronef à hélice, un bateau à hélice ou un engin chenillé.

Etat de la technique antérieure

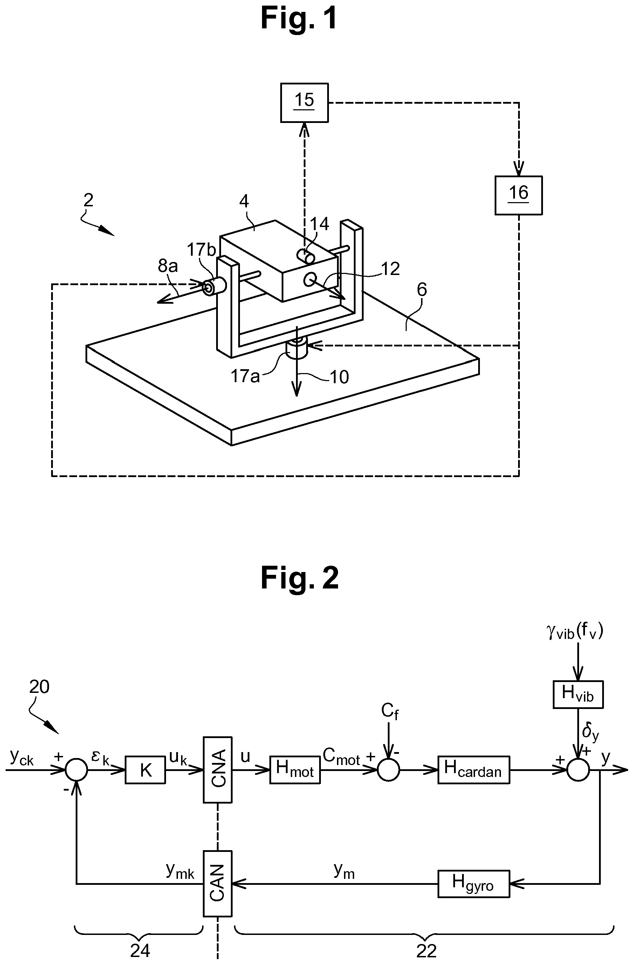

Un viseur optronique 2 est constitué d'un ensemble de caméras et / ou de dispositif de pointage, appelé module de visée 4. Ce module de visée 4 est placé sur un support 6 d'un engin motorisé et peut se mouvoir selon deux axes 8a, 10. La ligne de visée 12 dudit viseur optronique 2 désigne l'axe optique sortant de l'un de ces capteurs. Le but du viseur optronique 2 est d'orienter la ligne de visée 12 vers une cible quels que soient les mouvements de l'engin motorisés et/ou de la cible, et quel que soit l'environnement extérieur (conditions atmosphériques, etc.). A cette fin, ledit module de visée 4 comporte des moyens de mesure 14 en continu d'une donnée angulaire, i.e. un gyromètre 14 dans le cas de la mesure de la vitesse angulaire ou un gyroscope 14 pour mesurer la position angulaire de la ligne de visée 12 comme cela est illustré en figure 1.

La vitesse de rotation du rotor et des pales d'un hélicoptère ou le régime moteur d'avions à hélices, bateaux à hélices ou véhicules chenillés engendrent des perturbations vibratoires qui détériorent la stabilisation de la ligne de visée 12 des viseurs optroniques 2. Il est alors nécessaire de mettre en place un processus permettant de stabiliser l'image de manière précise et donc notamment de corriger la donnée angulaire (vitesse ou position angulaire) de la ligne de visée 12 grâce à un correcteur 15. Cette correction se fait ensuite par l'intermédiaire de moyens de commande 16 des moyens de déplacement 17a, 17b qui peuvent comprendre des cardans actionnés par des moteurs.

Pour rejeter les perturbations vibratoires agissant sur le module de visée 4 et rendre ainsi la ligne de visée 12 fixe dans un repère inertiel, il est donc nécessaire que la somme des couples, i.e. le couple moteur $C_{mot}$ et le couple de frottement $Cf$ dû aux roulements des cardans, appliqués au module de visée 4 soit nulle.

Pour cela, il est classiquement connu d'utiliser une boucle d'asservissement 20 capable d'agir sur la donnée angulaire (vitesse ou position) de la ligne de visée 12 comme illustré en figure 2. Chaque bloc de ladite boucle d'asservissement 20 peut être conçu comme un système, c'est-à-dire un ensemble de relations liant des entrées et des sorties qui peuvent être explicitées à l'aide de fonction de transfert.

Le but de la boucle d'asservissement 20 est donc de permettre aux moteurs de générer un couple $C_{mot}$ qui compense notamment le couple de frottement $Cf$ au niveau des cardans motorisés pour stabiliser l'orientation angulaire de la ligne de visée, lorsqu'un

aéronef portant le viseur bouge angulairement. On parlera alors de fonction de transfert $H_{mot}$ entre une tension $u$ et un couple $C_{mot}$. La consigne $u$ des moteurs est générée par la sortie d'un correcteur K. Cette boucle d'asservissement a pour objectif de faire tendre la sortie $y$ vers une référence $y_{ck}$, bien que les moteurs et cardans soient soumis à des perturbations dues au roulement des cardans $C_f$ et à la perturbation angulaire $\delta_y$.

La fonction d'asservissement de la ligne de visée du viseur optronique 2 sera ainsi développée plus en détail. Cette dernière se décompose en deux parties : une partie analogique 22 et une partie numérique 24. Tout d'abord, dans la partie analogique 22, les raies spectrales associées aux vibrations perturbatrices $\gamma_{vib}$ engendrées par la rotation du rotor et des pales d'un hélicoptère sont identifiées et des filtres fixes sur ces raies spectrales seront par la suite constitués. Ainsi, la fonction de transfert $H_{vib}$ permet de modéliser l'impact des vibrations perturbatrices $\gamma_{vib}$ sur l'orientation angulaire de la ligne de visée. En sortie de la fonction de transfert, on obtient donc la perturbation angulaire $\delta_y$ de la ligne de visée due aux vibrations perturbatrices $\gamma_{vib}$ qui pourra ainsi être considérée dans la boucle d'asservissement du viseur optronique. Cette méthode d'asservissement se base donc sur une connaissance a priori d'un modèle du système étudié.

Ensuite, une autre des étapes consiste à modéliser la dynamique de la donnée angulaire (position ou vitesse angulaire) de la ligne de visée par une fonction de transfert appelée $H_{gyro}$. Cette fonction de transfert se base soit sur la mesure $y$ de la position de la ligne de visée par l'intermédiaire d'un gyroscope, soit sur la mesure $y$ de la vitesse angulaire de la ligne de visée obtenue par un gyromètre ou plus précisément par le capteur inertiel du gyromètre. La mesure de la donnée angulaire de la ligne de visée $y_m$ obtenue passe dès lors par un Convertisseur Analogique Numérique (CAN) et est ainsi échantillonnée pour devenir la mesure échantillonnée $y_{mk}$. Une erreur d'asservissement $\varepsilon_k$ est alors obtenue par différence entre une référence $y_{ck}$ et la mesure échantillonnée $y_{mk}$. Cette erreur d'asservissement $\varepsilon_k$ passe alors en entrée d'un correcteur K linéaire et invariant dans le temps. Ce dernier est calculé en vue de compenser les vibrations perturbatrices $\gamma_{vib}$ dont la fréquence fondamentale $f_v$ est fixe dans le temps. L'implémentation logicielle dudit correcteur K se fait sous forme de combinaison (somme et/ou produit) de filtres linéaires numériques du second ordre. En sortie de ce correcteur est obtenue une commande moteur numérique $u_k$ qui est ensuite transformée en commande analogique $u$ (tension) par un Convertisseur Numérique Analogique (CNA). Cette commande analogique $u$ est appliquée au moteur électrique, modélisé par la fonction de transfert $H_{mot}$, qui délivre en conséquence un couple électromécanique. Elle permet ainsi d'obtenir le couple électromécanique $C_{mot}$ à fournir par le moteur pour tourner les cardans. Plus l'erreur $\varepsilon_k$ sera importante, plus le couple $C_{mot}$ fourni par les moteurs devra être important afin de réduire cette erreur. Le couple électromécanique $C_{mot}$ fourni par le moteur actionne les cardans modélisés par la fonction de transfert $H_{cardan}$, afin de compenser/annuler l'erreur $\varepsilon_k$. Cette erreur est due d'une part au couple perturbateur de frottements dans les roulements des cardans et d'autre part à la perturbation angulaire $\delta_y$.

Concernant les véhicules aériens ou aéronefs à hélices, les bateaux à hélices ou les véhicules chenillés, il n'y a pas actuellement de solution efficace pour de tels engins motorisés comportant, en fonctionnement, des variations de régime moteur ou des variations des fréquences de vibration générées par les chenilles. En effet, les variations de régime moteur induise un spectre de vibrations avec des raies spectrales spécifiques dont la fréquence fondamentale varie avec ledit régime moteur et qui nécessite d'utiliser des correcteurs s'adaptant à ces fréquences variables.

Le document WO2019153263 A1 divulgue un viseur optronique.

En d'autres termes, il n'existe pas de correcteur permettant de compenser les mouvements angulaires de la ligne de visée dus aux vibrations linéaires de l'aéronef portant le viseur, lorsque ces vibrations ont un spectre avec des raies à fréquences variables. Ces mouvements angulaires peuvent découler d'une déformation de la mécanique qui n'est pas infiniment rigide. Il s'agit d'un point de vue de la ligne de visée de faibles rotations hautes fréquences qui induisent un flou sur l'image obtenue par une caméra, même si en valeur moyenne la ligne de visée pointe bien dans la même direction. Il est donc nécessaire de déterminer une boucle d'asservissement garantissant une certaine stabilité sur un domaine prédéfini a priori de fréquences variables associées aux vibrations dudit aéronef. Cette détermination doit être faite en temps réel, c'est-à-dire en fonctionnement.

Le présent document vise à remédier aux inconvénients précités, de manière simple, fiable et peu onéreuse.

Présentation de l'invention

À cet effet, l'invention concerne un viseur optronique pour engin motorisé tel un véhicule aérien ou marin propulsé par hélice, ou un véhicule terrestre chenillé comprenant un module de visée apte à être déplacé autour d'un premier axe et un second axe non parallèle au premier axe, des moyens de déplacement du module de visée autour du premier et du second axe des moyens de mesure en continu d'une donnée angulaire dudit module autour des premier et second axes, ledit viseur optronique étant caractérisé en ce qu'il comprend une boucle d'asservissement comprenant : des moyens de mesure en continu de l'accélération du module de visée selon trois directions orthogonales de l'espace, des moyens de détection d'au moins une fréquence fondamentale des perturbations vibratoires engendrées par le fonctionnement de l'engin motorisé, cette fréquence étant obtenue à partir des données de sorties desdits moyens de mesure de l'accélération, un correcteur adaptatif configuré pour recevoir continûment en entrée ladite fréquence fondamentale, un écart entre une valeur de consigne angulaire et ladite donnée angulaire, et pour fournir en sortie une valeur de consigne de déplacement aux moyens de déplacement.

Par engin motorisé, on comprend ici qu'il s'agit d'un véhicule générant en fonctionnement un spectre de vibrations contenant des raies dont les fréquences peuvent varier au cours de l'utilisation.

Ainsi le correcteur adaptatif varie en fonction de la fréquence fondamentale du spectre des raies des vibrations perturbatrices, tout en garantissant la stabilité de la boucle d'asservissement. Ce correcteur adaptatif permet d'adapter automatiquement en temps réel les fréquences du filtre sélecteur à employer pour éliminer les perturbations vibratoires dues au fonctionnement de l'engin motorisé. Les vibrations correspondent à de faibles rotations hautes fréquences qui induisent un flou sur l'image obtenue par une caméra, même si en valeur moyenne la ligne de visée pointe bien dans la même direction. Une stabilisation inertielle de la ligne de visée plus robuste, le maximum de performance et de bonnes marges de robustesse de la boucle d'avertissement est dès lors obtenue. En outre, de par sa conception, ledit correcteur adaptatif pourra être utilisé sur plusieurs engins motorisés. Seules les fréquences spécifiques à l'engin motorisé seront à fournir au correcteur adaptatif, sans réglage supplémentaire à effectuer. Cela représente, en pratique, un gain de temps important.

Les moyens de mesure en continu de ladite donnée angulaire peuvent comporter un gyroscope apte à obtenir une position angulaire ou un gyromètre apte à obtenir une vitesse angulaire.

Lesdits moyens de mesure de l'accélération peuvent comprendre un accéléromètre.

La fréquence fondamentale peut être obtenue par Transformée de Fourier Rapide suivi d'un calcul d'un maximum dans la bande de fréquence obtenue après réalisation de ladite Transformée de Fourier Rapide ou par boucle à verrouillage de phase.

Le correcteur adaptatif peut être un correcteur Linéaire à Paramètres Variants.

Ce correcteur Linéaire à Paramètre Variant est linéaire mais variant dans le temps, en fonction de paramètres mesurables. Il dépend linéairement du paramètre variant.

Ledit correcteur adaptatif peut suivre la représentation d'état selon la formule suivante :

$$\begin{cases} x_{k+1} = A(\hat{f}_{vk})x_k + B(\hat{f}_{vk})\varepsilon_k \\ u_k = C(\hat{f}_{vk})x_k + D(\hat{f}_{vk})\varepsilon_k \end{cases}$$

$$f_{min} \leq \hat{f}_{vk} \leq f_{max}$$

où $x_k$ est la variable d'état du correcteur, $\varepsilon_k$ est l'erreur d'asservissement en entrée du correcteur, $u_k$ est la commande moteur numérique calculée par le correcteur (sortie du correcteur), $f_{min}$ et $f_{max}$ sont deux fréquences bornant la fréquence fondamentale en temps réel $\hat{f}_{vk}$ des vibrations perturbatrices $\gamma_{vib}$.

Le correcteur Linéaire à Paramètres Variants (LPV) peut comprendre les matrices d'état affines suivantes :

$$A\left(\hat{f}_{vk}\right) = A_0 + \hat{f}_{vk}\, A_1$$

$$B\left(\hat{f}_{vk}\right) = B_0 + \hat{f}_{vk}\, B_1$$

$$C\left(\hat{f}_{vk}\right) = C_0 + \hat{f}_{vk}\, C_1$$

$$D\left(\hat{f}_{vk}\right) = D_0 + \hat{f}_{vk}\, D_1$$

où $A_0$, $B_0$, $C_0$, $D_0$, $A_1$, $B_1$, $C_1$, $D_1$ désignent des gains matriciels qui sont les paramètres sauvegardés en mémoire d'un logiciel qui implémente ledit correcteur.

Le premier axe et le second axe peuvent être perpendiculaires l'un à l'autre.

Le présent document concerne également un engin motorisé tel qu'un hélicoptère, un véhicule aérien ou marin propulsé par hélice ou un véhicule terrestre chenillé comprenant un viseur optronique tel que décrit ci-dessus.

Brève description des figures

[Fig. 1] est une vue schématique d'un viseur optronique de l'art antérieur,
[Fig. 2] est un diagramme représentant le fonctionnement d'un viseur optronique dans l'art antérieur,
[Fig. 3] est une vue schématique d'un viseur optronique selon l'invention,
[Fig. 4] est un diagramme représentant le fonctionnement d'un viseur optronique selon l'invention,

Description détaillée de l'invention

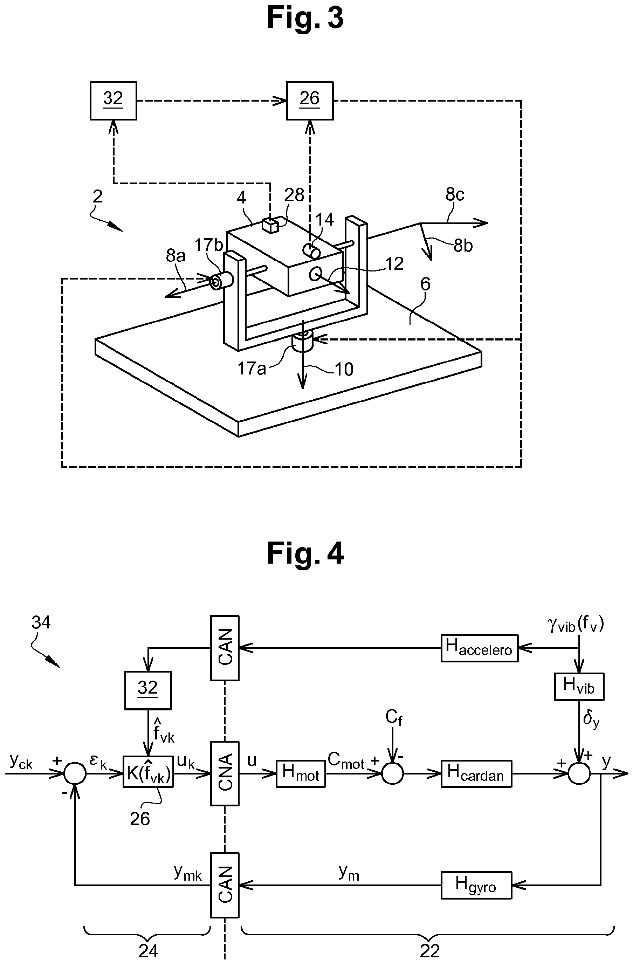

Les figures 3 et 4 illustrent respectivement une vue schématique d'un viseur optronique 2 et un diagramme représentant le fonctionnement d'un tel viseur selon une forme de réalisation de l'invention. De façon similaire à l'art antérieur, ledit viseur optronique 2 comprend notamment :

- un module de visée 4 apte à être déplacé autour d'un premier axe 8a et un second axe 10 perpendiculaire au premier axe,

- des moyens de déplacement 17a, 17b du module de visée 4 autour du premier 8a et du second axe 10,
- des moyens de mesure 14 en continu d'une donnée angulaire dudit module autour des premier 8a et second axe 10.

Dans le mode de réalisation illustré aux figures, le premier axe 8a et le second axe 10 sont perpendiculaires mais on comprend que les détails de réalisations donnés ci-après sont également applicables à des réalisations dans lesquelles les axes ne sont pas perpendiculaires ni même sécants. Le premier axe 8a et le second axe 10 peuvent également être sécants et non perpendiculaires.

Ledit viseur optronique 2 des figures 3 et 4 diffère du viseur optronique 2 présenté en référence aux figures 1 et 2 en ce que, dans la boucle d'asservissement 34 selon la présente divulgation, en entrée du correcteur K, on trouve désormais non seulement l'erreur d'asservissement $\varepsilon_k$ qui est fonction de la mesure échantillonnée $y_{mk}$ de la donnée angulaire mais aussi la fréquence fondamentale $\hat{f}_{vk}$, variant en temps réel, des vibrations perturbatrices $\gamma_{vib}$. Ce nouveau correcteur adaptatif $K(\hat{f}_{vk})$ 26 est donc calculé en vue de compenser la vibration perturbatrice $\gamma_{vib}$ ($f_v$) dont la fréquence fondamentale $f_v$ varie dans le temps. Pour cela, des moyens de mesure en continu de l'accélération 28 du module de visée selon les trois axes 8a, 8b, 8c d'un repère orthogonal de l'espace. Ces moyens de mesure en continu de l'accélération comprennent un accéléromètre 28. La fonction de transfert de l'accéléromètre $H_{accelero}$ permet de rendre compte de la dynamique dudit accéléromètre. Après passage par un Convertisseur Analogique Numérique, la fréquence fondamentale $\hat{f}_{vk}$ associée aux perturbations vibratrices $\gamma_{vib}$ est estimée en temps réel. Les moyens de détection 32 de la fréquence fondamentale $\hat{f}_{vk}$ repose sur deux techniques possibles : soit elle est calculée par Transformée de Fourier Rapide, soit pas une boucle à verrouillage de phase.

Les boucles à verrouillage de phase sont classiquement constituées d'un comparateur de phase, d'un filtre de boucle, d'un oscillateur commandé en tension et d'un diviseur de fréquence éventuel.

Concernant les calculs opérés par le correcteur adaptatif $K(\hat{f}_{vk})$, trois techniques peuvent être utilisées : soit en utilisant une commande Linéaire à Paramètres Variants (LPV), soit par le biais d'un correcteur symbolique, soit par une combinaison de ses deux types de correcteurs (LPV et symbolique).

Dans le cas d'un correcteur à commande LPV, une représentation d'état minimale du système $K(\hat{f}_{vk})$ est désigné par (A, B, C, D) avec

$A \in \mathbb{R}^{n \times n}$, $B \in \mathbb{R}^{n \times 1}$, $C \in \mathbb{R}^{1 \times n}$ et $D \in \mathbb{R}$ ..

L'implémentation logicielle sous forme d'état du correcteur adaptatif $K(\hat{f}_{vk})$ se fait selon la relation suivante :

$$\begin{cases} x_{k+1} = A(\hat{f}_{vk})x_k + B(\hat{f}_{vk})\varepsilon_k \\ u_k = C(\hat{f}_{vk})x_k + D(\hat{f}_{vk})\varepsilon_k \end{cases}$$

$$f_{min} \leq \hat{f}_{vk} \leq f_{max}$$

où $x_k \in \mathbb{R}^n$ est la variable d'état du correcteur adaptatif, $\varepsilon_k$ est l'erreur d'asservissement en entrée du correcteur adaptatif, $u_k$ est la commande moteur numérique calculée par le correcteur adaptatif (sortie du correcteur adaptatif), $f_{min}$ et $f_{max}$ sont deux fréquences bornant la fréquence fondamentale en temps réel $\hat{f}_{vk}$ des vibrations perturbatrices $\gamma_{vib}$.

Les matrices d'état (A, B, C, D) sont affines en $\hat{f}_{vk}$ et s'écrivent sous la forme :

$$A(\hat{f}_{vk}) = A_0 + \hat{f}_{vk} A_1$$

$$B(\hat{f}_{vk}) = B_0 + \hat{f}_{vk} B_1$$

$$C(\hat{f}_{vk}) = C_0 + \hat{f}_{vk} C_1$$

$$D(\hat{f}_{vk}) = D_0 + \hat{f}_{vk} D_1$$

où $A_0$, $B_0$, $C_0$, $D_0$, $A_1$, $B_1$, $C_1$, $D_1$ désignent des gains matriciels qui sont les paramètres sauvegardés en mémoire d'un logiciel qui implémente ledit correcteur adaptatif $K(\hat{f}_{vk})$.

Ainsi le correcteur adaptatif $K(\hat{f}_{vk})$ varie en fonction de la fréquence fondamentale du spectre des raies des vibrations perturbatrices $\gamma_{vib}$ ($f_v$), tout en garantissant la stabilité de la boucle d'asservissement. Ce correcteur adaptatif $K(\hat{f}_{vk})$ permet d'adapter automatiquement en temps réel (sans avoir à recalculer tout le correcteur contrairement à l'art antérieur) la fréquence du filtre sélecteur à employer sans risque d'instabilité, de saturation ou de dégradation de la robustesse de l'asservissement.

## Revendications

1. Viseur optronique (2) pour engin motorisé tel qu'un véhicule aérien ou marin propulsé par hélice ou un véhicule terrestre chenillé comprenant :

   - un module de visée (4) apte à être déplacé autour d'un premier axe (8a) et un second axe (10) non parallèle au premier axe (8a),
   - des moyens de déplacement (17a, 17b) du module de visée autour du premier (8a) et du second axe (10),
   - des moyens de mesure (14) en continu d'une donnée angulaire dudit module (4) autour des premier (8a) et second axe (10),

   caractérisé en ce qu'il comprend une boucle d'asservissement comprenant :

   - des moyens de mesure en continu de l'accélération (28) du module de visée (4) selon trois directions orthogonales de l'espace (8a, 8b, 8c),
   - des moyens de détection (32) d'au moins une fréquence fondamentale des perturbations vibratoires engendrées par le fonctionnement de l'engin motorisé, cette fréquence étant obtenue à partir des données de sorties desdits moyens de mesure de l'accélération (28),
   - un correcteur adaptatif (26) configuré pour :

     -- recevoir continûment en entrée :

       --- ladite fréquence fondamentale,
       --- un écart entre une valeur de consigne angulaire ($y_{ck}$) et ladite donnée angulaire

     -- fournir en sortie une valeur de consigne de déplacement aux moyens de déplacement (17a, 17b).

2. Viseur optronique selon la revendication 1, dans lequel les moyens de mesure (14) en continu de ladite donnée angulaire comportent un gyroscope (14) apte à obtenir une position angulaire ou un gyromètre (14) apte à obtenir une vitesse angulaire.

3. Viseur optronique selon l'une des revendications précédentes, dans lequel lesdits moyens de mesure de l'accélération (28) comprennent un accéléromètre (28).

4. Viseur optronique selon l'une des revendications précédentes, dans lequel ladite fréquence fondamentale est obtenue par Transformée de Fourier Ra-pide suivi d'un calcul d'un maximum dans la bande de fréquence obtenue après réalisation de ladite Transformée de Fourier Rapide ou par boucle à verrouillage de phase.

5. Viseur optronique selon l'une des revendications précédentes, dans lequel ledit correcteur adaptatif comprend un correcteur Linéaire à Paramètres Variants.

6. Viseur optronique selon la revendication 5, dans lequel ledit correcteur adaptatif (26) suit la représentation d'état selon la formule suivante :

$$\begin{cases} x_{k+1} = A\big(\hat{f}_{vk}\big)x_k + B\big(\hat{f}_{vk}\big)\varepsilon_k \\ u_k = C\big(\hat{f}_{vk}\big)x_k + D\big(\hat{f}_{vk}\big)\varepsilon_k \end{cases}$$

$$f_{min} \le \hat{f}_{vk} \le f_{max}$$

où $x_k$ est la variable d'état du correcteur, $\varepsilon_k$ est l'erreur d'asservissement en entrée du correcteur adaptatif (26), $u_k$ est la commande moteur numérique calculée par le correcteur adaptatif (26) (sortie du correcteur), $f_{min}$ et $f_{max}$ sont deux fréquences bornant la fréquence fondamentale en temps réel $\hat{f}_{vk}$ des vibrations perturbatrices $\gamma_{vib}$.

**7.** Viseur optronique selon la revendication 5 ou 6, dans lequel ledit correcteur Linéaire à Paramètres Variants (LPV) comprend les matrices d'état affines suivantes :

$$A\big(\hat{f}_{vk}\big) = A_0 + \hat{f}_{vk}\,A_1$$

$$B\big(\hat{f}_{vk}\big) = B_0 + \hat{f}_{vk}\,B_1$$

$$C\big(\hat{f}_{vk}\big) = C_0 + \hat{f}_{vk}\,C_1$$

$$D\big(\hat{f}_{vk}\big) = D_0 + \hat{f}_{vk}\,D_1$$

où $A_0, B_0, C_0, D_0, A_1, B_1, C_1, D_1$ désignent des gains matriciels qui sont les paramètres sauvegardés en mémoire dudit correcteur.

**8.** Viseur optronique selon l'une des revendications précédentes, dans lequel le premier axe (8a) et le second axe (10) sont perpendiculaires l'un à l'autre.

**9.** Engin motorisé tel qu'un véhicule aérien ou marin propulsé par hélice ou un véhicule terrestre chenillé comprenant un viseur optronique selon les revendications 1 à 8.

**Patentansprüche**

**1.** Optronische Visiereinrichtung (2) für ein motorisiertes Fahrzeug wie ein propellergetriebenes Luft- oder Wasserfahrzeug oder ein Raupenlandfahrzeug, umfassend:

- ein Zielmodul (4), das um eine erste Achse (8a) und eine zweite Achse (10), die nicht parallel zur ersten Achse (8a) verläuft, verlagert werden kann,

- Mittel (17a, 17b) zum Verlagern des Zielmoduls um die erste (8a) und die zweite Achse (10),
- Mittel (14) zur kontinuierlichen Messung einer Winkelangabe des Moduls (4) um die erste (8a) und die zweite Achse (10),

**dadurch gekennzeichnet, dass** sie eine Regelschleife enthält, umfassend:

- Mittel (28) zur kontinuierlichen Messung der Beschleunigung des Zielmoduls (4) in drei orthogonalen Raumrichtungen (8a, 8b, 8c),
- Mittel (32) zur Erfassung zumindest einer Grundfrequenz der durch den Betrieb des motorisierten Fahrzeugs erzeugten Schwingungsstörungen, wobei diese Frequenz aus den Ausgangsdaten der Mittel (28) zur Messung der Beschleunigung gewonnen wird,
- ein adaptives Korrigierglied (26), das ausgelegt, um:

-- kontinuierlich als Eingang zu empfangen:

--- die genannte Grundfrequenz,
--- eine Abweichung zwischen einem Winkelsollwert ($y_{ck}$) und der genannten Winkelangabe,

-- am Ausgang einen Verlagerungssollwert für die Verlagerungsmittel (17a, 17b) bereitzustellen.

**2.** Optronische Visiereinrichtung nach Anspruch 1, wobei die Mittel (14) zur kontinuierlichen Messung der Winkelangabe ein Gyroskop (14) umfassen, das geeignet ist, eine Winkelposition zu erhalten, oder ein Gyrometer (14), das geeignet ist, eine Winkelgeschwindigkeit zu erhalten.

**3.** Optronische Visiereinrichtung nach einem der vorhergehenden Ansprüche, wobei die Mittel (28) zur Messung der Beschleunigung einen Beschleunigungsmesser (28) umfassen.

**4.** Optronische Visiereinrichtung nach einem der vorhergehenden Ansprüche, wobei die Grundfrequenz durch eine Schnelle Fourier-Transformation gefolgt von einer Berechnung eines Maximums in dem nach der Durchführung der Schnellen Fourier-Transformation erhaltenen Frequenzband oder durch eine Phasenregelschleife erhalten wird.

**5.** Optronische Visiereinrichtung nach einem der vorhergehenden Ansprüche, wobei das adaptive Korrigierglied ein lineares Korrigierglied mit variablen Parametern umfasst.

**6.** Optronische Visiereinrichtung nach Anspruch 5,

wobei das adaptive Korrigierglied (26) der Zustandsdarstellung gemäß der folgenden Formel folgt:

$$\begin{cases} x_{k+1} = A(\hat{f}_{vk})x_k + B(\hat{f}_{vk})\varepsilon_k \\ u_k = C(\hat{f}_{vk})x_k + D(\hat{f}_{vk})\varepsilon_k \end{cases}$$

$$f_{min} \leq \hat{f}_{vk} \leq f_{max}$$

worin $x_k$ die Zustandsvariable des Korrigierglieds ist, $\varepsilon_k$ der Regelungsfehler am Eingang des adaptiven Korrigierglieds (26) ist, $u_k$ die vom adaptiven Korrigierglied (26) berechnete digitale Antriebsansteuerung (Korrigierglied ausgang) ist, $f_{min}$ und $f_{max}$ zwei Frequenzen sind, die die Echtzeitgrundfrequenz $\hat{f}_{vk}$ der Störschwingungen $\gamma_{vib}$ eingrenzen.

**7.** Optronische Visiereinrichtung nach Anspruch 5 oder 6,

wobei das lineare Korrigierglied mit variablen Parametern (LPV) die folgenden affinen Zustandsmatrizen umfasst:

$$A(\hat{f}_{vk}) = A_0 + \hat{f}_{vk}\, A_1$$

$$B(\hat{f}_{vk}) = B_0 + \hat{f}_{vk}\, B_1$$

$$C(\hat{f}_{vk}) = C_0 + \hat{f}_{vk}\, C_1$$

$$D(\hat{f}_{vk}) = D_0 + \hat{f}_{vk}\, D_1$$

worin $A_0$, $B_0$, $C_0$, $D_0$, $A_1$, $B_1$, $C_1$, $D_1$ Matrixverstärkungen bezeichnen, die die im Speicher des Korrigierglieds hinterlegten Parameter sind.

**8.** Optronische Visiereinrichtung nach einem der vorhergehenden Ansprüche,
wobei die erste Achse (8a) und die zweite Achse (10) senkrecht zueinander stehen.

**9.** Motorisiertes Fahrzeug wie propellergetriebenes Luft- oder Wasserfahrzeug oder Raupenlandfahrzeug, umfassend eine optronische Visiereinrichtung nach den Ansprüchen 1 bis 8.

**Claims**

**1.** An optronic sight (2) for a motorized vehicle such as an aerial or marine vehicle propelled by a propeller or a tracked land vehicle comprising:

- an aiming module (4) able to be moved about a first axis (8a) and a second axis (10) not parallel to the first axis (8a),
- means (17a, 17b) for moving the aiming module about the first (8a) and second (10) axes,
- means (14) for continuously measuring an angular data of said module (4) about the first (8a) and second (10) axes,

**characterized in that** it comprises a feedback control loop comprising:

- means for continuously measuring the acceleration (28) of the aiming module (4) according to three orthogonal directions of the space (8a, 8b, 8c),
- means (32) for detecting at least one fundamental frequency of the vibratory disturbances generated by the operation of the motorized vehicle, this frequency being obtained based on the output data of said acceleration measuring means (28),
- an adaptive corrector (26) configured to:

-- continuously receive as input:

--- said fundamental frequency,
--- a discrepancy between an angular setpoint value ($y_{ck}$) and said angular data

-- output a movement setpoint value to the moving means (17a, 17b).

**2.** The optronic sight according to claim 1, wherein the means (14) for continuously measuring said angular data include a gyroscope (14) able to obtain an angular position or a gyrometer (14) able to obtain an angular speed.

**3.** The optronic sight according to one of the preceding claims, wherein said means for measuring the acceleration (28) comprise an accelerometer (28).

**4.** The optronic sight according to one of the preceding claims, wherein said fundamental frequency is obtained by Fast Fourier Transform followed by a calculation of a maximum in the frequency band obtained after carrying out said Fast Fourier Transform or by phaselocked loop.

5. The optronic sight according to one of the preceding claims, wherein said adaptive corrector comprises a Linear Variant Parameter corrector.

6. The optronic sight according to claim 5, wherein said adaptive corrector (26) follows the state representation according to the following formula:

$$\begin{cases} x_{k+1} = A(\hat{f}_{vk})x_k + B(\hat{f}_{vk})\varepsilon_k \\ u_k = C(\hat{f}_{vk})x_k + D(\hat{f}_{vk})\varepsilon_k \end{cases}$$

$$f_{min} \leq \hat{f}_{vk} \leq f_{max}$$

where $x_k$ is the state variable of the corrector, $\varepsilon_k$ is the feedback control error at the input of the adaptive corrector (26), $u_k$ is the digital motor command calculated by the adaptive corrector (26) (output of the corrector), $f_{min}$ and $f_{max}$ are two frequencies limiting the fundamental frequency in real-time $\hat{f}_{vk}$ of the disturbing vibrations $\gamma_{vib}$.

7. The optronic sight according to claim 5 or 6, wherein said Linear Variant Parameter (LPV) corrector comprises the following affine state matrices:

$$A(\hat{f}_{vk}) = A_0 + \hat{f}_{vk} A_1$$

$$B(\hat{f}_{vk}) = B_0 + \hat{f}_{vk} B_1$$

$$C(\hat{f}_{vk}) = C_0 + \hat{f}_{vk} C_1$$

$$D(\hat{f}_{vk}) = D_0 + \hat{f}_{vk} D_1$$

where $A_0, B_0, C_0, D_0, A_1, B_1, C_1, D_1$ designate matrix gains which are the parameters saved in the memory of said corrector.

8. The optronic sight according to one of the preceding claims, wherein the first axis (8a) and the second axis (10) are perpendicular to each other.

9. A motorized vehicle such as an aerial or marine vehicle propelled by a propeller or a tracked land vehicle comprising an optronic sight according to claims 1 to 8.

# Fig. 1

# Fig. 2

# Fig. 3

# Fig. 4

**EP 4 217 790 B1**

**Documents brevets cités dans la description**

- WO 2019153263 A1